# EUROPEAN PATENT SPECIFICATION

(11) **EP 4 309 078 B1**
(45) Date of publication and mention of the grant of the patent: **18.03.2026**
(21) Application number: 21715540.7
(22) Date of filing: 24.03.2021
(51) Int. Cl.: G06N 3/0464, G06N 3/0455, G06N 3/084, G06N 3/09

(54) **APPARATUS AND METHOD FOR LOW-MEMORY RESIDUAL LEARNING**
VORRICHTUNG UND VERFAHREN FÜR SPEICHERARMES RESTLERNEN
APPAREIL ET PROCÉDÉ D'APPRENTISSAGE RÉSIDUEL À FAIBLE MÉMOIRE

(43) Date of publication of application: 24.01.2024
(73) Proprietor: Huawei Technologies Co., Ltd., Longgang Shenzhen, Guangdong 518129 (CN)
(72) Inventor: ALEXIOU, Ioannis, 80992 Munich (DE); BABILONI, Francesca, 80992 Munich (DE); SLABAUGH, Gregory, 80992 Munich (DE); MARRAS, Ioannis, 80992 Munich (DE)
(74) Representative: Goddar, Heinz J.
(86) International application number: PCT/EP2021/057589
(87) International publication number: WO 2022/199811

(56) References cited:
- KAIMING HE ET AL: "Deep Residual Learning for Image Recognition", 10 December 2015 (2015-12-10), pages 1 - 12, XP055717904, Retrieved from the Internet <URL:https://arxiv.org/pdf/1512.03385.pdf> [retrieved on 20200724], DOI: 10.1109/CVPR.2016.90
- LIGENG ZHU ET AL: "Sparsely Aggregated Convolutional Networks", ARXIV.ORG, CORNELL UNIVERSITY LIBRARY, 201 OLIN LIBRARY CORNELL UNIVERSITY ITHACA, NY 14853, 18 January 2018 (2018-01-18), XP081227244
- SERGEY ZAGORUYKO ET AL: "DiracNets: Training Very Deep Neural Networks Without Skip-Connections", 1 June 2017 (2017-06-01), XP055562535, Retrieved from the Internet <URL:https://arxiv.org/pdf/1706.00388v1.pdf> [retrieved on 20211215]

## Description

### FIELD OF THE INVENTION

This invention relates to computer vision, and in particular to using a deep neural network, such as a convolutional neural network, for processing an input signal, for example in applications such as image analysis.

### BACKGROUND

With over 1.5 billion smartphones currently sold annually, it is unsurprising that smartphone images now vastly outnumber images captured with DSLR and point-and-shoot cameras.

While the prevalence of smartphones makes them a convenient device for photography, memory restrictions on the device limit the class of image analysis and synthesis methods that can be executed, and therefore may result in suboptimal quality. Thus, powerful tools that perform significantly well in image analysis or synthesis cannot be used in some pipelines, such as camera image signal processors (ISPs) in smartphones. This problem has heightened the need for overcoming these limitations.

Deep neural networks with skip connections, such as ResNet (as described in He Kaiming, et al. "Deep residual learning for image recognition." CVPR, 2016), show excellent performance in various image processing benchmarks. It is however observed that the initial motivation behind them - training deeper networks - does not hold true, and the benefits come from increased capacity, rather than from depth.

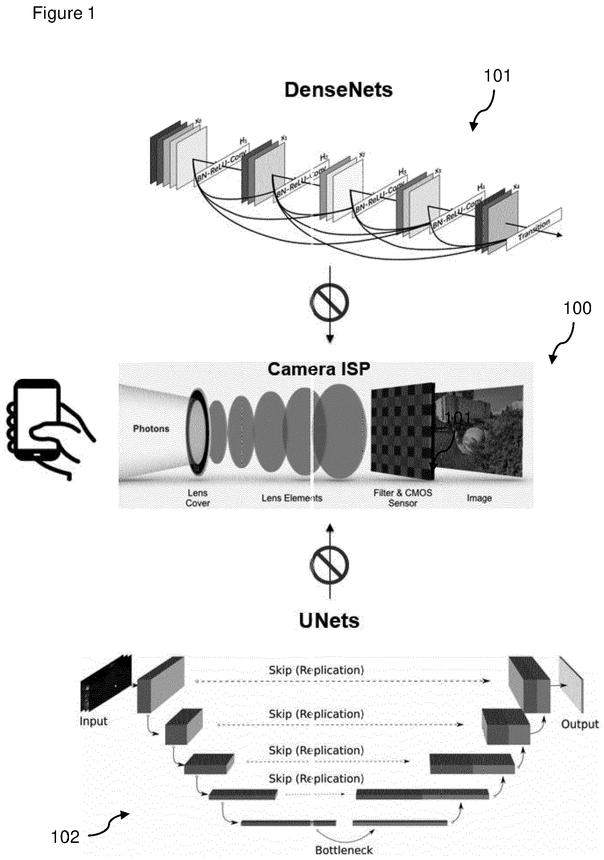

Residual learning is a memory-hungry task that cannot be applied to pipelines with memory limitations, such as a smartphone camera ISP 100, as illustrated in Figure 1. Deep neural networks such as DenseNets and UNets, shown at 101 and 102 respectively, therefore cannot generally be used in such applications.

The representation view of deep learning suggests that neural networks learn an increasingly abstract representation of input data in a hierarchical fashion (see M. D. Zeiler, et al. "Visualizing and understanding convolutional networks", ECCV, 2014, I. Goodfellow, et al. "Deep Learning", MIT Press, 2016, and K. Greff, et al. "Highway and residual networks learn unrolled iterative estimation", arXiv preprint arXiv:1612.07771, 2016). Such representations may then be exploited to perform various tasks such as image classification, machine translation and speech recognition.

There have been many attempts at training very deep networks. In image processing, after the success of AlexNet (described in A. Krizhevsky, et al. "Imagenet classification with deep convolutional neural networks", NIPS, 2012), the major improvement was brought with VGG (K. Simonyan, et al. "Very deep convolutional networks for large-scale image recognition", ICLR, 2015) and later with Inception (C. Szegedy, et al. "Going deeper with convolutions", CVPR, 2015). In recurrent neural networks, LSTM (S. Hochreiter, et al. "Long short-term memory", 1997) allowed for the training of deeper networks by introducing gated memory cells, leading to a major increase of parameter capacity and network performance. A natural conclusion of the representation view is that deeper networks will learn more detailed and abstract representations as a result of their increased capacity. However, in the case of feed-forward networks, it has been observed that performance deteriorates beyond a certain depth, even when the network is applied to training data.

Recently, Residual Networks (ResNets, K. He, et al. "Deep residual learning for image recognition." CVPR, 2016) and Highway Networks (see R. K. Srivastava, et al. "Training very deep networks", NIPS, 2015 and R. K. Srivastava, et al. "Highway networks", CoRR, abs/1505.00387, 2015) have demonstrated that introducing various types of skip connections or gating mechanisms makes it possible to train increasingly deep networks, resulting in a simple architecture with skip connections, which was shown to be generalizable to many other tasks. However, the aforementioned degradation problem persists in the case of plain deep networks (i.e., networks without skip connections of some form). There were also other ways of adding skip connections proposed, such as DenseNet (G. Huang, et al. "Densely connected convolutional networks", CVPR, 2017), which passed all previous activations to each new layer. Although the aforementioned approaches have sought to train deeper networks via modifications to the network architecture (i.e., by adding skip connections) success has also been obtained by modifying the non-linearities (D.-A. Clevert, et al. "Fast and accurate deep network learning by exponential linear units (elus) ", arXiv preprint arXiv:1511.07289, 2015 and G. Klambauer, et al. "Self-normalizing neural networks", NIPS, 2017).

A widely held hypothesis explaining the success of ResNets is that the introduction of skip connections serves to improve the conditioning of the optimization, as well as the statistical properties of gradients employed during training. In T. Raiko, et al. "Deep learning made easier by linear transformations in perceptrons", AIS, 2012 and N. N. Schraudolph, "Centering neural network gradient factors", Neural Networks: Tricks of the Trade, 2012, it is reported that the introduction of specially designed skip connections serves to diagonalize the Fisher information matrix, thereby bringing standard gradient steps closer to the natural gradient. More recently, in D. Balduzzi, et al. "The shattered gradients problem: If ResNets are the answer, then what is the question?", arXiv preprint arXiv:1702.08591, 2017, it was demonstrated that the introduction of skip connections helps retain the correlation structure across gradients. This is contrary to the gradients of deep feed-forward networks, which resemble white noise.

More generally, the skip connections are thought to reduce the effects of vanishing gradients by introducing a linear term (see K. He, et al. "Identity mappings in deep residual networks", ECCV, 2016). To deal with the degradation problem in the context of plain feed-forward networks, the method in R. P. Monti, et al. "Avoiding degradation in deep feed-forward networks by phasing out skip connections", ICANN, 2018 poses the learning of weights in deep networks as a constrained optimization problem where the presence of skip connections is penalized by Lagrange multipliers. This allows for skip connections to be introduced during the early stages of training and subsequently phased out in a principled manner.

Recently, the goal of learning deep networks without skip connections has begun to receive more attention. A re-parameterization of weights in feedforward networks, known as the Dirac parameterization was proposed in S. Zagoruyko, et al. "Diracnets: Training very deep neural networks without skip connections", arXiv preprint arXiv:1706.00388, 1 June 2017. Instead of explicitly adding a skip connection, the weights were modelled as a residual of the Dirac function, effectively moving the skip connection inside the non-linearity. The initialization of weights in a CReLU activation function in order to preserve linearity during the initial phases of training was proposed in D. Balduzzi, et al. "The shattered gradients problem: If resnets are the answer, then what is the question?", arXiv preprint arXiv:1702.08591, 2017. This was achieved by initializing the weights in a mirrored block structure. During training the weights were allowed to diverge, resulting in nonlinear activations.

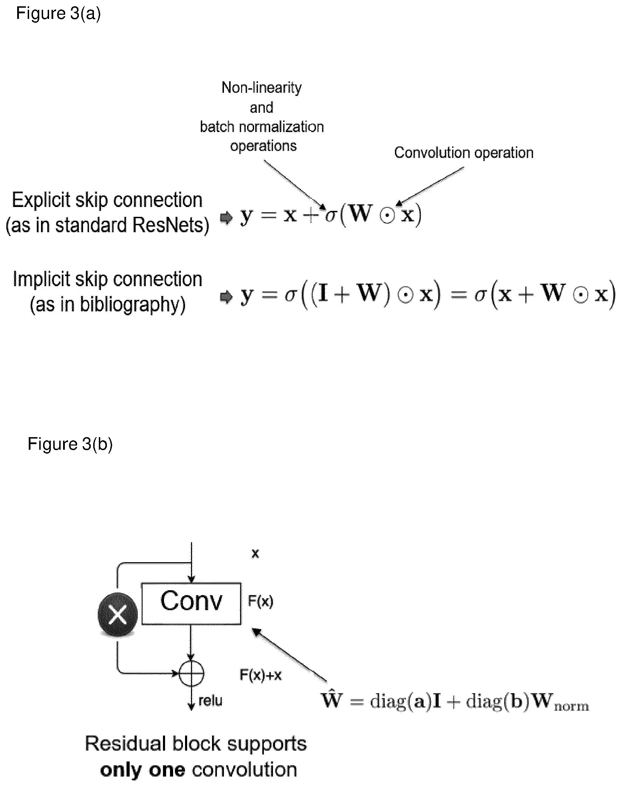

A major drawback of prior methods for performing residual learning without explicit skip connections is that explicit skip connections are not supported, since the non-linearity and the batch normalization operations are applied to the identity mappings (see Figure 3(a)). Furthermore, deep skip connections cannot be supported because the identity mapping is linearly combined with the output of the convolution thus the original identity mapping is lost after the first convolution step and cannot be recovered (see Figure 3(b)). In that case, useful residual learning-based architectures, such as Unets or DenseNets, cannot be supported.

It is desirable to develop an approach that overcomes these problems.

### SUMMARY OF THE INVENTION

According to a first aspect there is provided an apparatus for processing an input signal comprising an input tensor, comprising C channels, wherein the input tensor is derived from an image captured by an imaging device, the apparatus having a processor and being configured to implement a convolutional neural network (CNN) for performing residual learning, the network comprising one or more convolutional layers, each layer comprising a plurality of convolutional filters, wherein, for at least one of the layers, at least some of the convolutional filters of the respective layer are configured to: propagate a representation of the input tensor through the respective layer of the network; and append the propagated representation of the input tensor to features derived from other convolutional filters in the respective layer to form a residual connection, wherein the output of the at least one convolutional layer is two sub-tensors each having C channels which are added to perform residual learning for an image restoration task. The approach can be implemented in low-memory devices, such as smartphones, and can conveniently support all skip connection types, which may be performed without explicitly adding a skip connection.

In one implementation, the representation of the input tensor comprises or corresponds to the initial input tensor itself. This may allow the input tensor to be explicitly propagated through one or more layers of the network.

The convolutional neural network may comprise one or more skip connections. The at least some of the convolutional filters of the respective layer may be configured to propagate the representation of the input tensor to be used for the skip connection through the network. Skip connections, which can connect the intermediate layers of the network with its subsequent layers may in image processing applications enforce the network to learn the residual between the features corresponding to the predicted image and the actual image. This may result in faster convergence. For example, in an encoder-decoder network, skip connections may connect the intermediate layers of the encoder with the corresponding intermediate layers of the decoder, For each such convolutional layer, the at least some of the convolutional filters may be configured to propagate the representation of the input tensor through the network to the convolutional layer in which it is to be used for residual learning. This may reduce the memory required, as storing of the input tensor is not necessary.

The input tensor comprises C channels and the at least some of the convolutional filters of the respective layer may comprise C filters. This may allow the C convolutional filters to propagate the input tensor through the respective convolutional layer.

The output of the respective convolutional layer may have N channels. N-C filters of the respective convolutional layer may be used for the standard convolution. C filters may be used to explicitly pass the input tensor. This may allow the C filters to propagate the input tensor through the respective convolutional layer.

The at least some of the convolutional filters may be fixed to be non-learnable. The at least some of the convolutional filters may be configured to pass the input tensor to a subsequent convolutional layer. This may allow the convolutional filters to propagate the input tensor through the network.

The at least some of the convolutional filters may be configured to explicitly propagate the input tensor through the at least one of the layers.

One or more of the least some convolutional filters may be Dirac filters. Such filters are non-learnable and may be a convenient way of propagating the input tensor through at least one of the layers.

The at least some convolutional filters may implicitly reconstruct the input tensor to form the representation of the input tensor. The at least some of the convolutional filters may be configured to learn the representation of the input tensor as a loss-driven task.

A residual loss between the initial input tensor and the output of the respective convolutional layer may be defined by a user. This may improve the training of the network. The network may be configured to determine the number of filters constituting the at least some convolutional filters of the respective layer based on the residual loss.

The input tensor is derived from an image. The convolutional neural network performs an image restoration task. The image restoration task may comprise one or more of denoising and demosaicking. The image restoration task may comprise joint denoising and demosaicking (JDD). This may allow the method to be used in devices such as smartphones to remove noise from images captured by the cameras of such devices. In embodiments not falling under the scope of the claims, other applications are possible.

Each image may be a RAW image or an RGB image. The images are captured by an imaging device such as a camera in a smartphone. The apparatus may comprise an imaging device having an image sensor that captured the image, and the apparatus may be configured to generate the image using the imaging device.

The residual learning may form a deep skip connection over a plurality of convolutional layers of the network (i.e. between a first convolutional layer and a subsequent convolutional layer, where the first convolutional layer and the subsequent convolutional layer are separated by two or more convolutional layers between them). The residual learning forms a shallow skip connection over one convolutional layer of the network (i.e. between a first convolutional layer and a subsequent convolutional layer, where the first convolutional layer and the subsequent convolutional layer are separated by one convolutional layer between them). The approach may therefore conveniently support all skip connection types.

The output of the at least one convolutional layer or a subsequent convolutional layer of the network are used to perform the residual learning.

According to another aspect there is provided a method implemented by an apparatus having a processor for processing an input signal comprising an input tensor, comprising C channels, the apparatus being configured to implement a convolutional neural network for performing residual learning, wherein the input tensor is derived from an image captured by an imaging device, the network comprising one or more convolutional layers, each layer comprising a plurality of convolutional filters, wherein the method comprises, for at least one of the layers: propagating, by at least some of the convolutional filters of the respective layer, a representation of the input tensor through the respective layer of the network; and appending the propagated representation of the input tensor to features derived from other convolutional filters in the respective layer to form a residual connection, wherein the output of the at least one convolutional layer is two sub-tensors each having C channels which are added to perform residual learning for an image restoration task.

The method can be implemented in low-memory devices such as smartphones and can conveniently support all skip connection types, which may be performed without explicitly adding a skip connection.

According to a further aspect there is provided a computer program which, when executed by an apparatus having a processor, causes the apparatus to perform the method described above. The computer program may be provided on a non-transitory computer readable storage medium.

### BRIEF DESCRIPTION OF THE FIGURES

The present invention will now be described by way of example with reference to the accompanying drawings. In the drawings:
Figure 1 schematically illustrates a camera image signal processor (ISP) used in smartphones.
This ISP is one example of a pipeline which cannot fully support residual learning-based convolutional neural networks due to hardware limitations.
Figure 2 schematically illustrates residual learning and shows a building block (figure taken from K. He, et al. "Deep residual learning for image recognition." CVPR, 2016).
Figure 3(a) demonstrates that explicit skip connections may not be supported in prior methods, since non-linearity and batch normalization operations are applied to the identity mappings.
Figure 3(b) demonstrates that only low-memory shallow skip connections may be supported in prior methods. Deep skip connections cannot be supported because the identity mapping is linearly combined with the output of the convolution.
Figure 4 schematically illustrates the general idea behind the low-memory residual learning method for convolutional neural networks described herein.
Figure 5(a) schematically illustrates a non-learnable implementation of the low-memory residual learning for convolutional neural networks.
Figure 5(b) schematically illustrates a learnable implementation of the low-memory residual learning for convolutional neural networks.
Figure 6 schematically illustrates an implementation of the non-learnable version of the low-memory residual learning for convolutional neural networks.
Figure 7 schematically illustrates that the non-learnable implementation of the low-memory residual learning for neural networks is equal to performing standard residual learning with fewer learnable filters.
Figure 8 schematically illustrates an implementation of the learnable version of the low-memory residual learning for neural networks.
Figure 9(a) schematically illustrates the architecture of PlainNet in the case of shallow skip connection.
Figure 9(b) schematically illustrates the architecture of ResNet in the case of shallow skip connection.
Figures 10(a)-(b) show an example of an image with ISO 4500: (a) JDD output without residual learning and (b) JDD output using the method described herein.
Figures 11(a)-(b) show an example of an image with ISO 6000: (a) JDD output without residual learning and (b) JDD output using the method described herein.
Figure 12 illustrates quantitative results in the case of the non-learnable version and shallow skip connection.
Figure 13(a) schematically illustrates the architecture of PlainNet in the case of shallow skip connection.
Figure 13(b) schematically illustrates the architecture of ResNet in the case of shallow skip connection.
Figures 14(a)-(c) show an example of an image with ISO 7K: (a) JDD output using 16 channels without residual learning, (b) JDD output using 16 channels using the method described herein and (c) the original image.
Figures 15(a)-(c) show examples of an image with ISO 5K: (a) JDD output using 16 channels without residual learning, (b) JDD output using 16 channels using the method described herein and (c) the original image. The colors in the original image are not the original ones due to a visualization for highlighting the image high frequency details.
Figure 16 shows quantitative results in the case of the non-learnable version and deep skip connection.
Figures 17(a)-(d) show an example of an image with ISO 5000: (a) original image, (b) JDD output without residual learning, (c) JDD output using the method described herein using *l*₁ loss and (d) JDD output using the method described herein using *l*₂ loss workaround.
Figure 18 shows quantitative results in the case of the learnable version and shallow skip connection. RL stands for residual learning.
Figure 19 shows a summary of an example of a method for processing an input signal comprising an input tensor.
Figure 20 shows an example of an apparatus configured to implement the method described herein.
Figure 21 shows an example of a camera having an image sensor.

### DETAILED DESCRIPTION OF THE INVENTION

Described herein is an apparatus and method for low-memory residual learning for convolutional neural networks (CNNs). The method can conveniently support all skip connection types, which may be performed without explicitly adding a skip connection.

As will be described in more detail below, the feature tensor to be used for a skip connection can be propagated through the network using convolution operation. In this case, the need for storing the input tensor in memory, which is a memory-hungry task, can be avoided. Storing tensors in memory to perform the identity mapping, which the original residual learning requires, comes at a high cost in terms of memory consumption. The present approach may support residual learning in convolutional neural networks used in hardware pipelines in devices with memory limitations, such as smartphones.

To do this, some of the convolution filters in the layer are sacrificed (or the number of filters in the layer is increased). The sacrificed and/or additional filters in the respective layer of the network implicitly or explicitly learn how to propagate the tensors needed for the residual learning through the network. In this case, there is no need to store the tensor in memory, thus even deep residual skip connections are supported.

This may allow the use of powerful CNN architectures based on residual learning (for example, Unets and DenseNets) in hardware pipelines where this was previously not feasible due to memory limitations. The use of these architectures helps in achieving less network complexity and good performance in a variety of computer vision tasks.

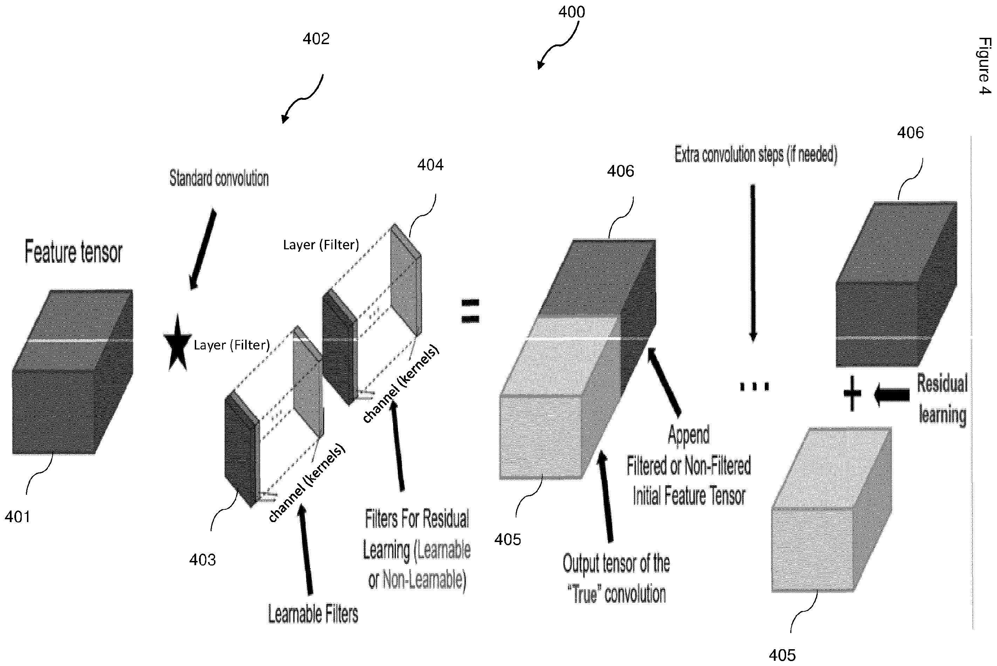

The general idea behind the approach described herein is the explicit (i.e. non-learnable) or implicit (i.e. learnable) definition of filters that can propagate a feature tensor derived from an input signal through the network up to the layer in which it will be used for residual learning, as schematically illustrated in Figure 4 for network 400.

In this embodiment, the input tensor is shown at 401. The input tensor is derived from an input signal corresponding to an image, for example a RAW image or an RGB image. A convolutional layer of the network is shown generally at 402. The convolutional layer 402 comprises a plurality of convolutional filters. The filters shown at 403 are filters that form the output tensor of the standard convolution, shown at 405. In this example, these filters are learnable filters. The filters shown at 404 are learnable or non-learnable filters that propagate the input tensor or a learned representation thereof 406 through the layer 402. The propagated feature tensor 406 is appended to the feature tensor 405 derived from the other convolutional filters in the respective layer, thus forming a residual connection.

The filters of each layer can therefore propagate, using convolution operation, the input tensor through the network for one or more layers.

The output of convolutional layer 402 comprises the representation of the input tensor 406, which has been propagated through the network (either explicitly or learned) and features 405 derived from the other convolutional filters in the layer 402.

Further such convolutional steps which propagate the input tensor to the layer in which the residual learning is performed may be included as necessary.

The representation of the input tensor 406 and the features 405 are then split and summed in the residual learning.

As previously mentioned, there are two preferred ways of implementing this general method. Each implementation can conveniently support different kinds of skip connections.

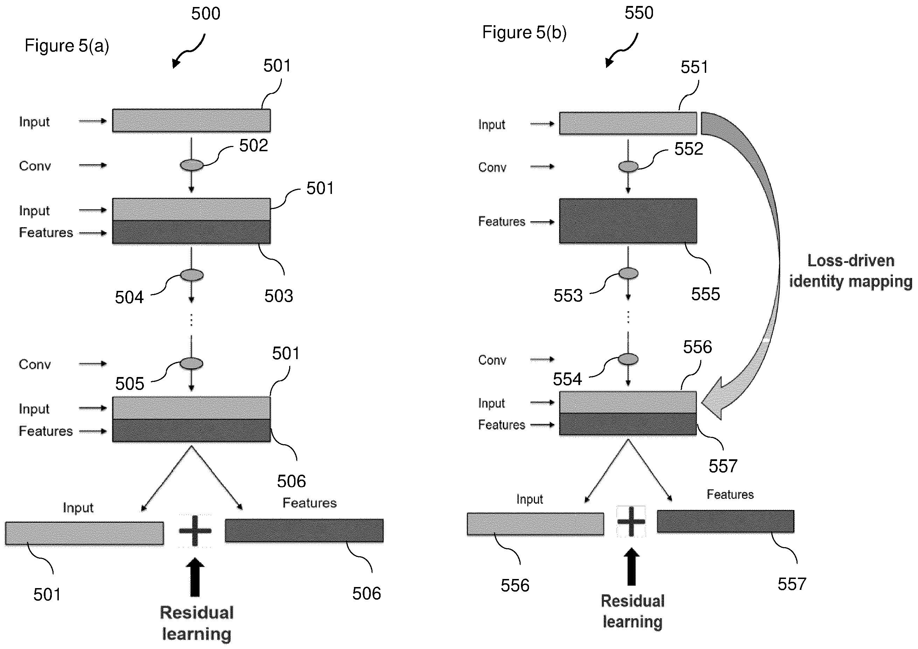

In a first implementation, pre-defined non-learnable filters (for example, Dirac filters) are explicitly defined to perform the identity mapping. This implementation is schematically illustrated in Figure 5(a) for network 500.

In this embodiment, the input tensor is shown at 501. The input tensor is derived from an input signal corresponding to an image. The network 500 comprises multiple convolutional layers, shown at 502, 504 and 505. Each convolutional layer comprises a plurality of convolutional filters. Taking convolutional layer 502 as an example, layer 502 comprises multiple filters, some of which are configured to propagate the input tensor 501 through the layer of the network 502. The input tensor 501 is then appended to features 503 derived from the other convolutional filters in the respective layer 502, thus forming a residual connection. In this implementation, the input tensor 501 is explicitly passed through the layer 502 and is appended to the feature tensor 503 that is output from the convolutional layer 502.

The filters of each layer can therefore propagate, using a convolution operation, the input tensor through the network for one or more layers.

The output of a subsequent convolutional layer 505 is input tensor 501, which has been propagated through the network, and features 506 derived from the other convolutional filters in the layer 505.

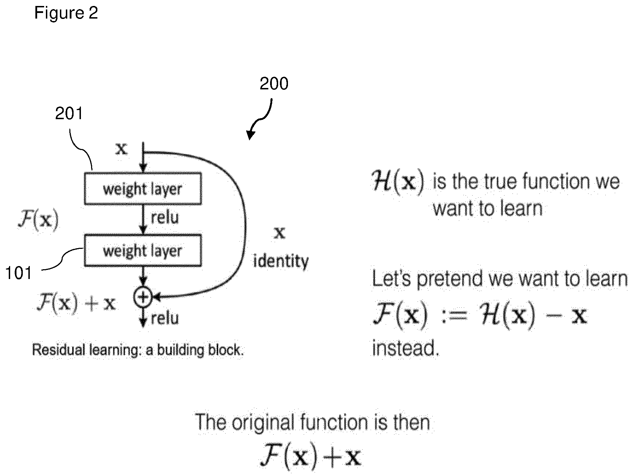

The input tensor 501 and the features 506 are then split and summed in the residual learning. In a second, learnable implementation schematically illustrated in Figure 5(b) for network 550, the identity mapping (as depicted in Figure 2) becomes a loss-driven task thus an implicit filter definition is performed.

In this embodiment, the input tensor is shown at 551. The input tensor is derived from an input signal corresponding to image. The network comprises multiple convolutional layers, shown at 552, 553 and 554. Each convolutional layer comprises a plurality of convolutional filters.

In this example, the output of convolutional layer 552 is feature tensor 555.

Layer 554 comprises multiple filters, some of which are configured to propagate a representation 556 of the input tensor 551 through the layer 554 of the network. The representation of the input tensor is then appended to features 557 derived from the other convolutional filters in the layer 554, thus forming a residual connection. In this implementation, the representation of the input tensor is learned and is appended to the features output from the convolutional layer. The filters of each layer can thus propagate, using a convolution operation, the representation of the input tensor through the network for one or more layers.

The representation of the input tensor 556 and the features 557 are then split and summed in the residual learning.

The main difference between these two implementations is that in the non-learnable implementation, illustrated in Figure 5(a), the skip connection is implicit, since the non-linearities are applied to the feature tensor to be used for the skip connection. In the learnable implementation, illustrated in Figure 5(b), the representation of the input tensor 556 to be used for the skip connection is very close to the initial input tensor 551 and is obtained by learning.

In both implementations, some of the convolution filters, which implicitly, or explicitly learn how to, propagate the tensors needed for the residual learning through the network, are sacrificed compared to the standard residual learning method. This number of filters depends on the channel size of the tensor (width x height x channels) to be propagated.

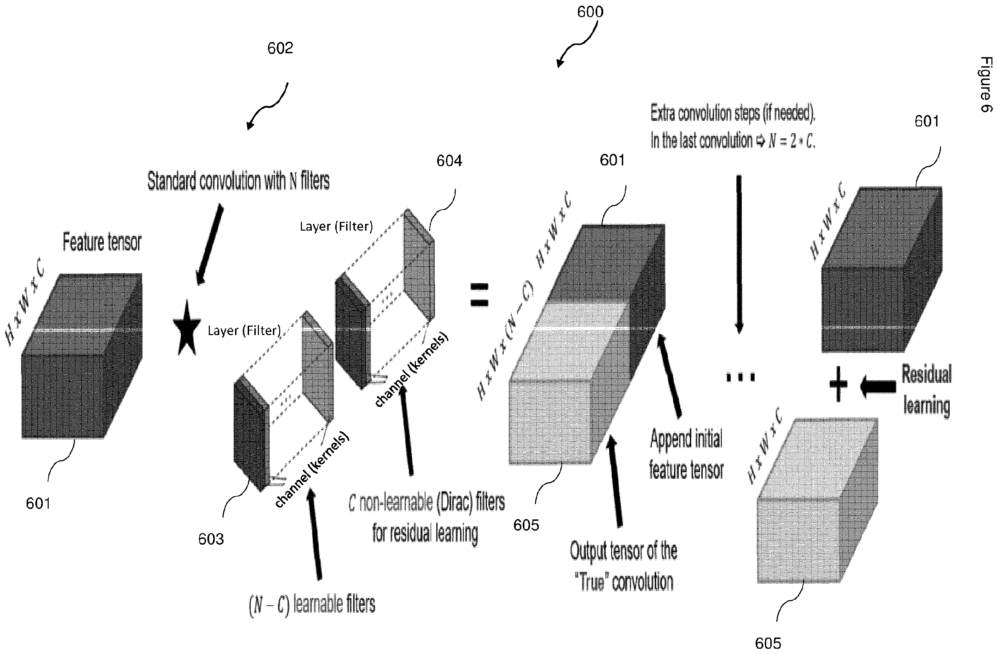

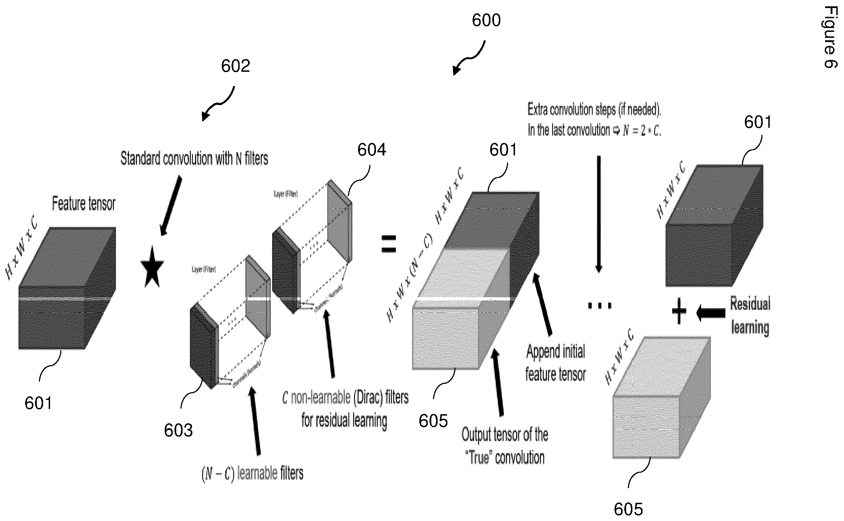

In a further example of the non-learnable version of the method described herein, the explicit definition of Dirac filters helps to propagate, using convolution operation, the input feature tensor through the network, as depicted in Figure 6 for network 600.

In this example, the initial feature tensor 601 has C channels, height H and width W. The output of the intermediate convolution 602 has N channels. As shown at 603, (N - C) filters are used for the standard convolution and, as shown at 604, C filters are used to propagate the input tensor through the convolutional layer 602.

The initial feature tensor 601 is concatenated to the output of the standard convolution 605.

There can be as many intermediate convolution steps as desired (from shallow, i.e. a single step, to deep, i.e. multiple steps). In the last convolution before residual learning, N = 2 * *C* because that tensor is split into two sub-tensors with C channels which are added to perform the residual learning.

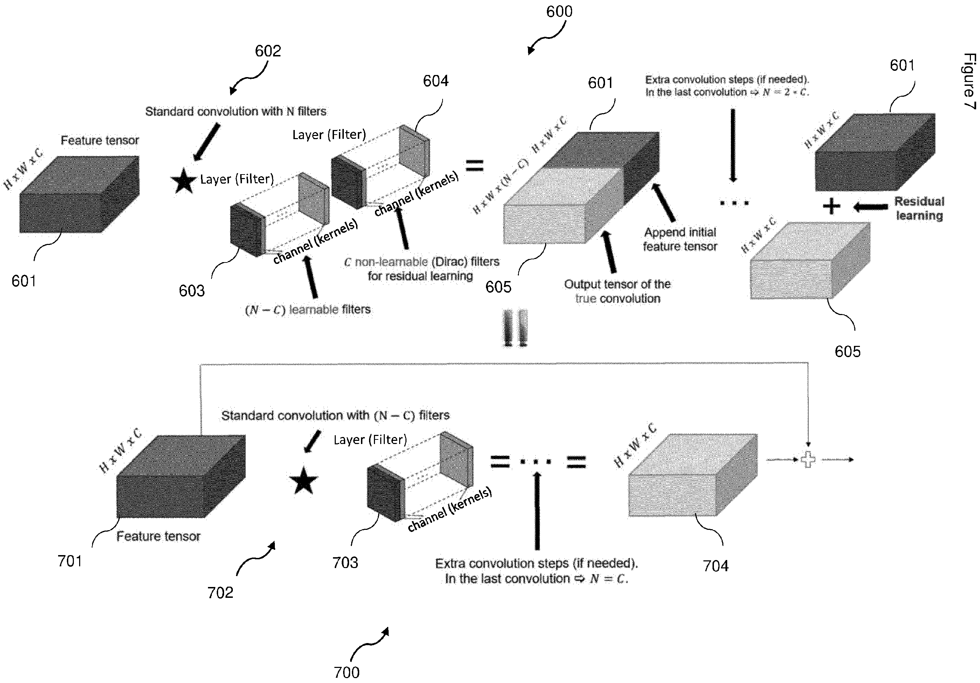

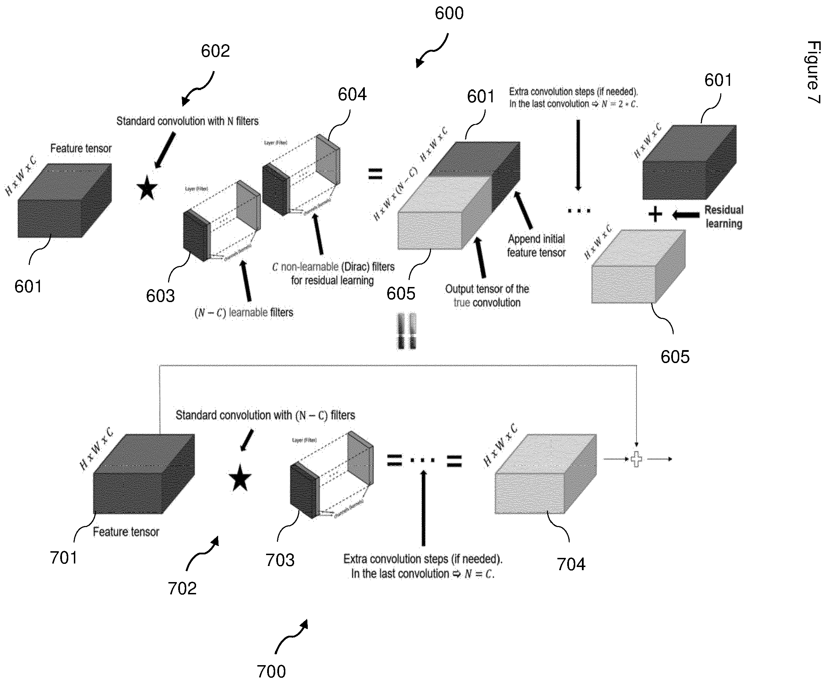

The non-learnable version is equal to performing the standard residual learning with fewer learnable filters, as depicted in Figure 7, which compares the network 600 of Figure 6 with a standard residual learning network 700. In network 700, the input feature tensor 701 is not propagated through the convolutional layer 702 via the filters 703, but is summed with the output 704 of the convolution in the residual learning.

Therefore, in the example of the non-learnable implementation shown in Figure 6, (N - C) filters are used for the intermediate convolutions and C filters for propagating the input tensor. Also, the non-learnable version of the described low-memory residual learning supports implicit skip connections, since the non-linearity and the batch normalization operations are applied to the identity mappings.

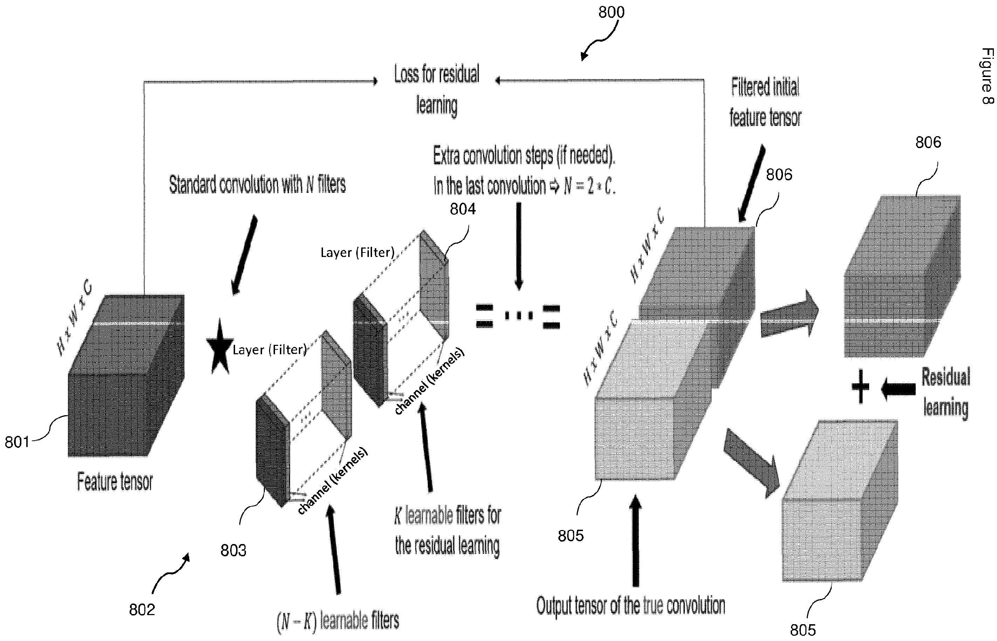

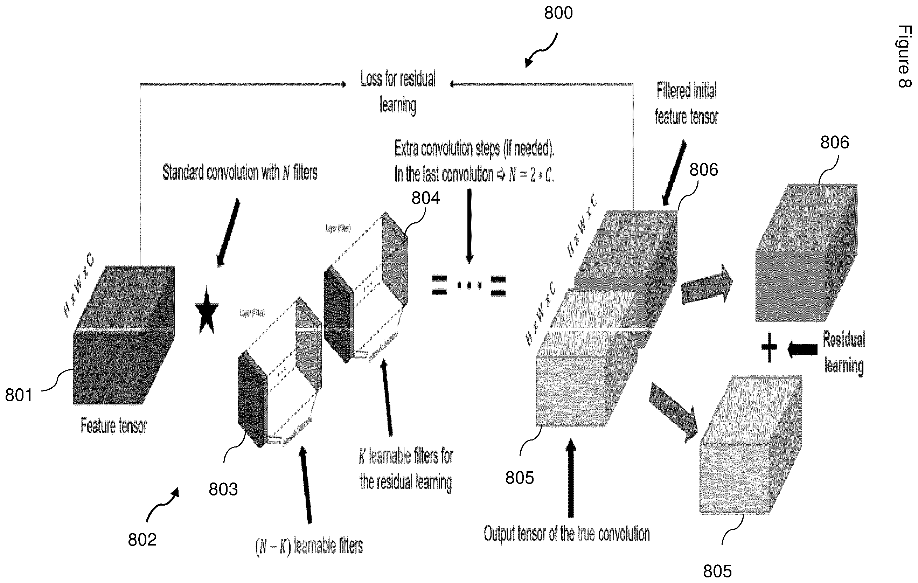

A further example of the learnable version of the method is schematically illustrated in Figure 8 for the network 800. An implicit definition of filters help to propagate, using convolution operation, information related to the initial feature tensor through the network. If the initial feature tensor 801 to be used for the residual learning has C channels, then for each intermediate convolution, (N - K) filters are used for the standard convolution and K filters are used to propagate the representation of the input tensor through the layer for the residual learning. There can be as many intermediate convolution steps as desired (from shallow to deep).

For convolutional layer 802, the (N - K) filters for performing the standard convolution are shown at 803. The K filters to propagate the representation of the input tensor through the layer for the residual learning are shown at 804.

The output of the convolutional layer before the residual learning has N = 2 * C channels, because that tensor is split into two sub-tensors with C channels which are added to perform the residual learning.

A residual learning loss (i.e. *l*₁) between the initial feature tensor 801 and the convolution output's sub-tensor 806 (C channels) before the residual learning can be defined by the user.

Preferably, K is preferably not defined by the user. Preferably, the network determines how many filters and of which type will be used given the selected residual learning loss.

The learnable version of the described low-memory residual learning supports implicit skip connections, as are used in standard residual learning. Also, the optimal mapping could be less close to the identity thus it is easier to find small fluctuations (i.e. force input sparsity if needed).

In a further implementation, skip connections can be defined using a concatenation operation. In the examples described above, the low-memory residual learning is based on skip connections defined as addition between tensors. In addition, residual learning can be defined as tensor concatenation, such as that in Unets.

To do so, instead of splitting the tensors in two sub-tensors with C channels, as presented above for both method versions, which are added to perform the residual learning, the method may proceed without this splitting step, implementing in that way skip connections using a concatenation operation.

The described low-memory residual learning method may be used for a variety of tasks, including image reconstruction. In the following examples, implementations of the network were used for the task of joint denoising-demosaicking (JDD), which is a very important task of the camera ISP using CNNs. In digital devices with limited resources, such as smartphones, only less complex models (~60 GMACs) can be employed by the Neural Processing Unit (NPU), making this task traditionally very hard. The NPU is generally built into the mobile processor to utilize advanced neural networks and provide new levels of vision intelligence.

In the following experiments and for different types of skip connections, a small JDD CNN using the method described herein (Residual Network - ResNet), without the method described herein (Plain Network - PlainNet) and the standard residual learning (ResNet) were used. The complexity of the model was fixed and was the same in all cases. Most of the network's learning parameters were spent in the denoising task. As presented above, both versions of the proposed residual learning method (learnable and non-learnable) can be implemented easily in any deep learning platform, since no custom layers are needed.

During training, the network learns the convolutional filters. This is done using training pairs, each comprising a noisy RAW input and a reference clean RGB image which is used as ground truth (GT). Initially, the convolutional filters are set to random values. The noisy RAW image is input into the network, and the network regresses an output image. The difference between the regressed output image and the GT image forms an error, which is then back-propagated through the network from the output to the input through gradients. The weights of the network are then updated to reduce the error. The training process iterates using a large collection of images until the network weights converge. Once the network is trained, during inference the network is applied to a noisy RAW input image to produce its clean RGB version. Regarding the image RAW domain, each pixel in a conventional camera (linear Bayer) sensor is covered by a single red, green, or blue color filter, arranged in a 4-channel Bayer pattern (i.e. R-G-G-B). Thus, the input to the network is a 4-channel packed image. Below, experimental JDD results are presented for different kinds of skip connections.

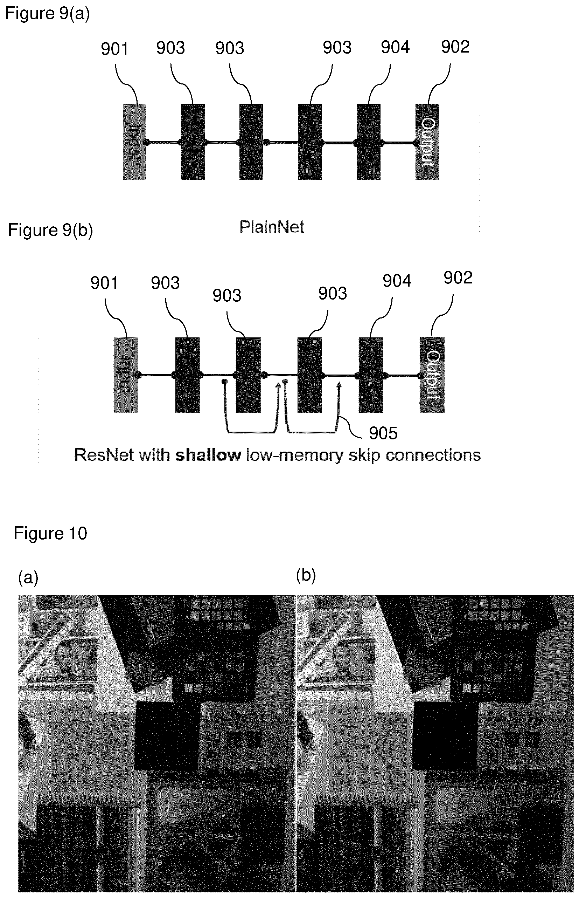

Figures 9(a) and 9(b) schematically illustrate the architecture of PlainNet and ResNet respectively used in the experiments in the case of shallow skip connections. The input and output are shown at 901 and 902 respectively. Convolutional layers are indicated at 903. Upsampling is indicated at 904. A shallow skip connection (skipping a single layer of the network) is shown at 905.

For the case of the non-learnable version with a shallow skip connection, the PlainNet is designed to have plain convolutional layers of width 32 (channels) to match the GMACs constraint. For fair comparison, the memory of the ResNet is the same along with its capacity. Both networks were implemented in TensorFlow, while the *l*₁ was used as task specific loss. The learning parameters are halved (16 channels) and the rest remain fixed deltas to perform the residual connections. Half of the tensor size of each layer remains unchanged to accommodate the previous feature space.

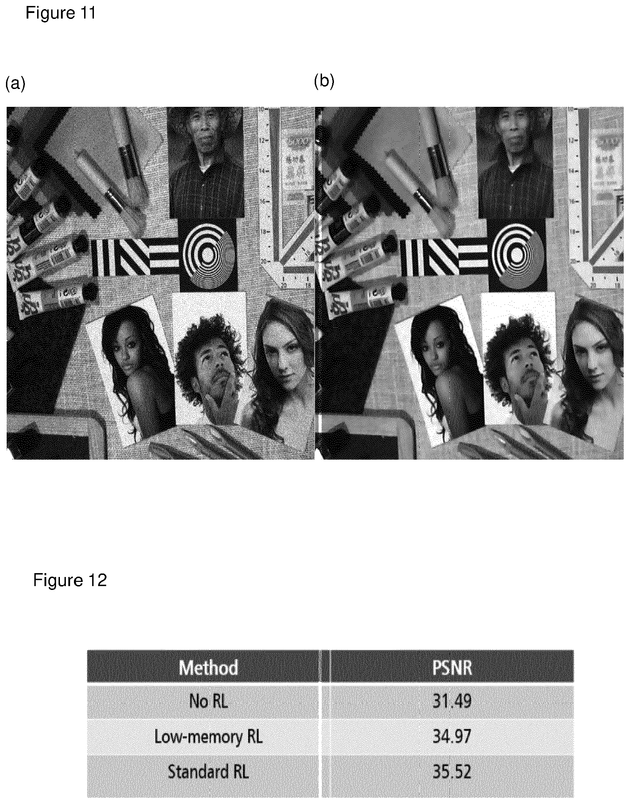

Some qualitative results are shown in Figures 10(a)-(b) and 11(a)-(b) for the non-learnable implementation with shallow skip connection.

Figures 10(a) and 10(b) show examples of an image with ISO 4500. Figure 10(a) shows the JDD output without using residual learning and Figure 10(b) shows the JDD output using the method described herein.

Figures 11(a) and 11(b) show further examples of an image with ISO 4500. Figure 11(a) shows the JDD output without using residual learning and Figure 11(b) shows the JDD output using the method described herein.

Figure 12 shows some quantitative results in the case of the non-learnable version and shallow skip connection. RL stands for residual learning.

Based on these experiments, the described method for low-memory residual learning significantly improves (~3.5 dB improvement) the performance when used in plain CNNs. In these experiments, a part of the convolution filters of the convolutional layers was sacrificed for implementing the residual learning. Therefore in this implementation the signal-to-noise ratio was slightly higher than the standard residual learning. To close the gap, a greater number of filters can be used. As shown in the images in Figures 10(b) and 11(b), significantly better denoising capabilities were achieved in these examples using the described low-memory residual learning.

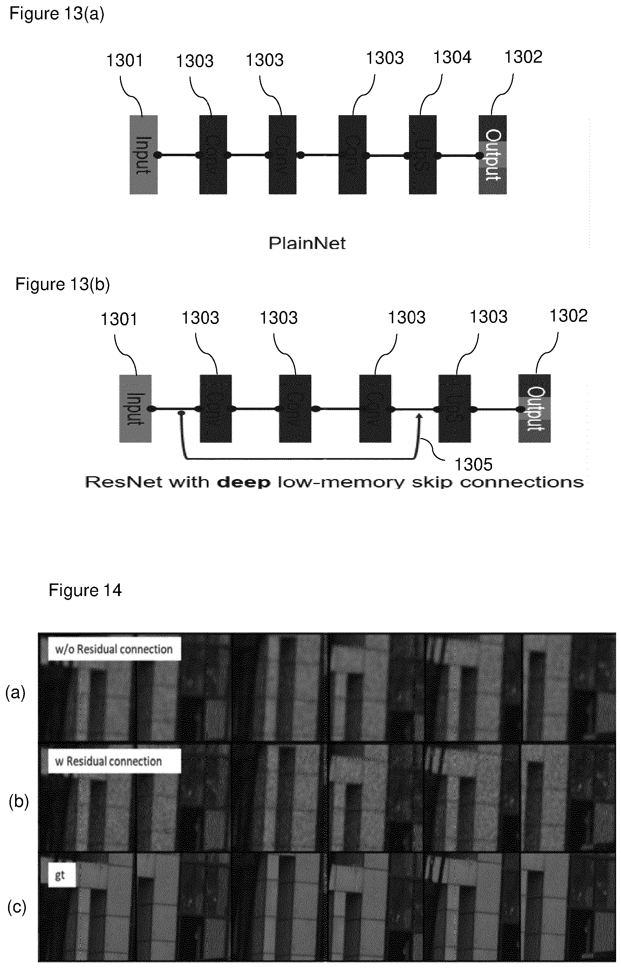

Figures 13(a) and 13(b) schematically illustrate the architecture of PlainNet and ResNet respectively used in the experiments in the case of deep skip connections. The input and output are shown at 1301 and 1302 respectively. Convolutional layers are indicated at 1303. Upsampling is indicated at 1304. A deep skip connection (skipping multiple layers of the network) is shown at 1305.

For the case of the non-learnable version with a deep skip connection, the PlainNet is designed to have plain convolutional layers of width 16 (channels) to match the GMACs constraint. For fair comparison, the memory of the ResNet was the same along with its capacity. Both networks were implemented in Pytorch, while the *l*₁ loss was used as the task specific loss. Only four channels remain fixed delta functions to perform the residual connections, thus 12 channels contained learnable parameters. In other words, only four channels of the tensor of each layer remain unchanged to accommodate the previous feature space.

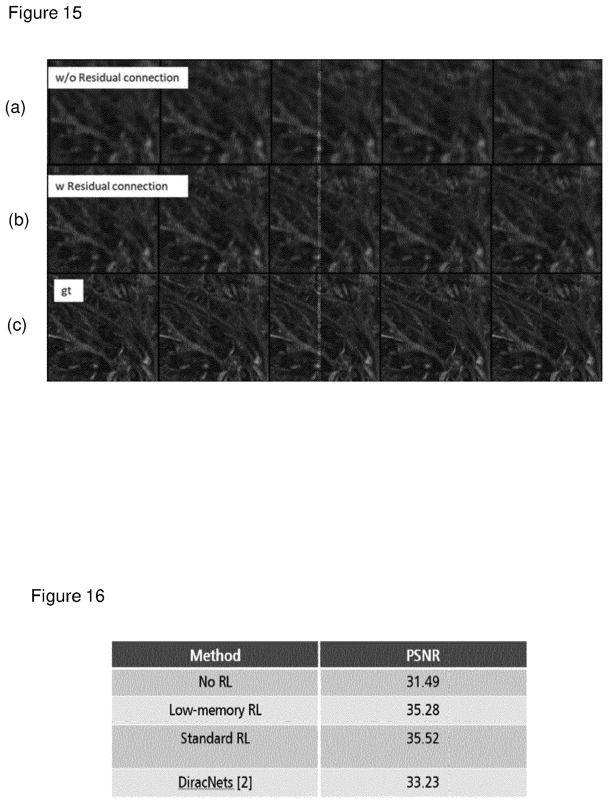

Some qualitative results are shown in Figures 14(a)-(c) and 15(a)-(c) for the non-learnable implementation with deep skip connection.

Figures 14(a)-14(c) show examples of an image with ISO 7K. Figure 14(a) shows the JDD output using 16 channels without residual learning, Figure 14(b) shows the JDD output using 16 channels with the method described herein and Figure 14(c) shows the original image.

Figures 15(a)-15(c) show examples of an image with ISO 5K. Figure 15(a) shows the JDD output using 16 channels without residual learning, Figure 15(b) shows the JDD output using 16 channels with the method described herein and Figure 15(c) shows the original image.

Figure 16 shows some quantitative results in the case of the non-learnable version and a deep skip connection.

The described method for low-memory residual learning may improve performance significantly (~3.8 dB improvement) when used in plain CNNs. In these experiments, a part of the convolution filters of the convolutional layers was sacrificed for implementing the residual learning. Therefore in this implementation the signal-to-noise ratio was slightly higher than the standard residual learning. To close the gap, a greater number of filters can be used. As shown in the images in Figure 14(b) and 15(b), significantly better denoising capabilities were achieved in these examples using the described low-memory residual learning.

Compared to the shallow skip connection, the improvement is higher in the case of deep skip connection because fewer channels are used for the residual learning.

For the case of the learnable version with a shallow skip connection, the PlainNet was designed to have plain convolutional layers of width 32 (channels) to match the GMACs constraint. For fair comparison, the memory of the ResNet is the same along with its capacity (see Figure 9(a) and 9(b)). Both networks were implemented in TensorFlow. Both *l*₁ and *l*₂ losses were tested to apply the residual learning. The task specific loss was the same as in residual learning. An extra loss was considered for every skip connection introduced.

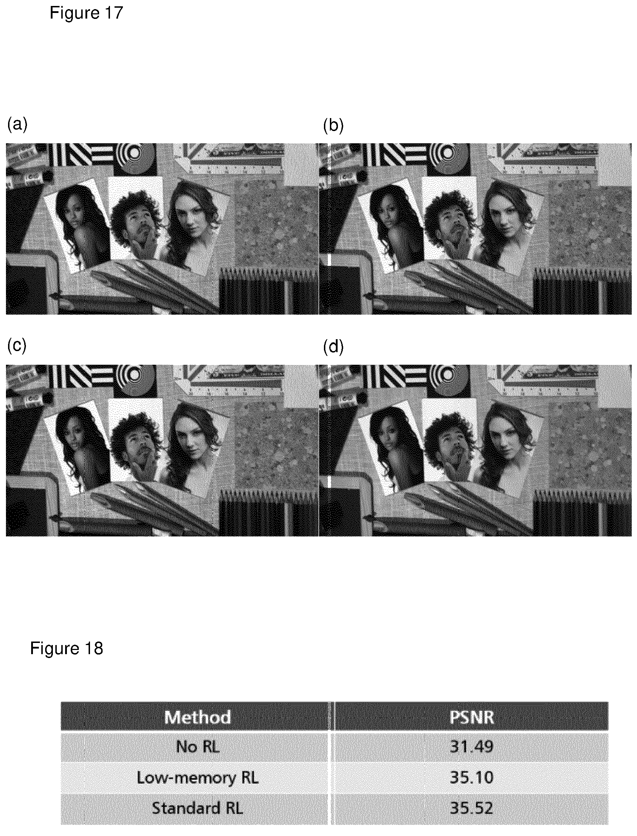

Some qualitative results are shown in Figures 17(a)-(d) for the learnable implementation with shallow skip connection.

Figures 17(a)-17(d) show examples of an image with ISO 5K. Figure 17(a) shows the JDD output without residual learning, Figure 17(b) shows the original image, Figure 17(c) shows the JDD output using the method described herein using *l*₁ loss and Figure 17(d) shows the JDD output using the method described herein using *l*₂ loss.

Figure 18 shows some quantitative results in the case of the learnable version and a shallow skip connection. Based on these experiments, the described method for low-memory residual learning significantly improves (~3.6 dB improvement) the performance when used in plain CNNs. In these experiments, a part of the convolution filters of the convolutional layers was sacrificed for implementing the residual learning. Therefore in this implementation the signal-to-noise ratio was slightly higher than the standard residual learning. To close the gap, a greater number of filters can be used.

For learnable implementations, a suitable loss function can be used for the residual learning task and a regularizer can be used for each residual learning loss term.

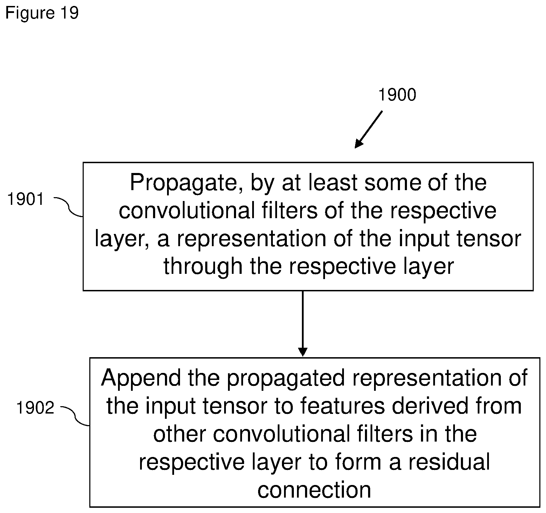

Figure 19 summarises a method 1900 for processing an input signal comprising an input tensor in an apparatus being configured to implement a convolutional neural network for performing residual learning, the network comprising one or more convolutional layers, each layer comprising a plurality of convolutional filters. The method comprises, for at least one of the layers, performing the following steps. At step 1901, the method comprises propagating, by at least some of the convolutional filters of the respective layer, a representation of the input tensor through the respective layer of the network. At step 1902, the method comprises appending the propagated representation of the input tensor to features derived from other convolutional filters in the respective layer to form a residual connection.

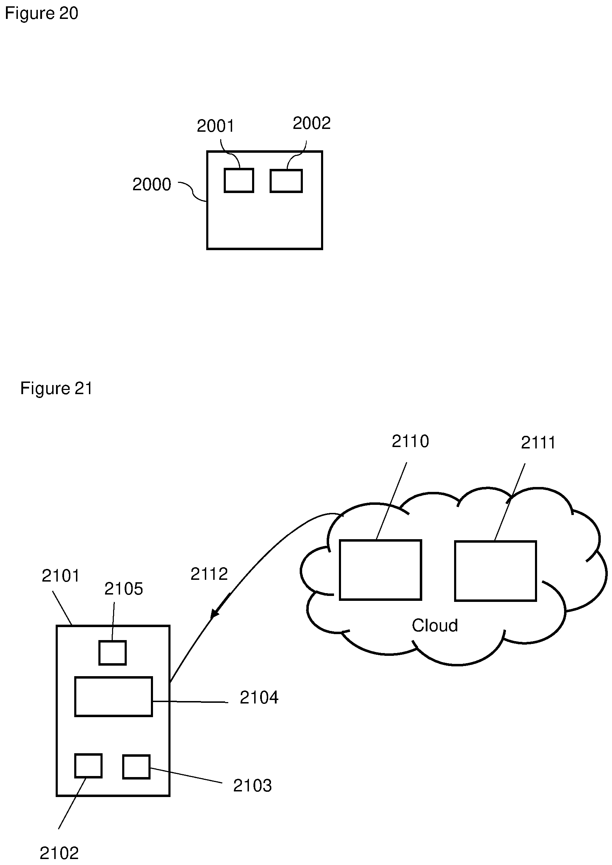

Figure 20 shows a schematic diagram of an apparatus 2000 configured to implement the methods described above and its associated components. The device may comprise a processor 2001 and a non-volatile memory 2002. The device may comprise more than one processor and more than one memory. The memory may store data that is executable by the processor. The processor may be configured to operate in accordance with a computer program stored in non-transitory form on a machine readable storage medium. The computer program may store instructions for causing the processor to perform its methods in the manner described herein. The components may be implemented in physical hardware or may be deployed on various edge or cloud devices.

Figure 21 shows an example of an architecture including an imaging device that can implement the methods described above in image processing applications. In this example, the imaging device is a camera 2101. However, any suitable imaging device may be used. For example, the imaging device may be a smartphone. A camera 2101 is connected to a communications network. Camera 2101 comprises an image sensor 2102. The camera also comprises a memory 2103, a processor 2104 and a transceiver 2105. The memory stores in non-transient form code that can be run by the processor 2104. In some implementations, that code may include a data-driven model as described above. The model may include code that is directly executable by the processor and/or parameters such as neural network weightings which are not directly executable instructions but serve to configure other executable code that is stored in the memory 2103. The transceiver 2105 may be capable of transmitting and receiving data over either or both of wired and wireless communication channels. For example, it may support Ethernet, IEEE 802.11B and/or a cellular protocol such as 4G or 5G.

Such a camera 2101 typically includes some onboard processing capability. This could be provided by the processor 2104. The processor 2104 could also be used for the essential functions of the device.

The transceiver 2105 is capable of communicating over a network with other entities 2110, 2111. Those entities may be physically remote from the camera 2101. The network may be a publicly accessible network such as the internet. The entities 2110, 2111 may be based in the cloud. Entity 2110 is a computing entity. Entity 2111 is a command and control entity. These entities are logical entities. In practice they may each be provided by one or more physical devices such as servers and datastores, and the functions of two or more of the entities may be provided by a single physical device. Each physical device implementing an entity comprises a processor and a memory. The devices may also comprise a transceiver for transmitting and receiving data to and from the transceiver 2105 of camera 2101. The memory stores in a non-transient way code that is executable by the processor to implement the respective entity in the manner described herein.

The command and control entity 2111 may train the CNN. This is typically a computationally intensive task, even though the resulting model may be efficiently described, so it may be efficient for the development of the model to be performed in the cloud, where it can be anticipated that significant energy and computing resource is available. It can be anticipated that this is more efficient than forming such a model at a typical camera.

In one implementation, once the model has been developed in the cloud, the command and control entity can automatically form a corresponding model and cause it to be transmitted to the relevant camera device. In this example, the processing of the input tensor is performed at the camera 2101 by processor 2104.

In another possible implementation, an image may be captured by the camera sensor 2102 and the image data may be sent by the transceiver 2105 to the cloud for processing. The resulting target image could then be sent back to the camera 2101, as shown at 2112 in Figure 21.

Therefore, the method may be deployed in multiple ways; for example in the cloud, on the device, or alternatively in dedicated hardware. As indicated above, the cloud facility could perform training to develop new models or refine existing ones. Depending on the compute capability near to the data corpus, the training could either be undertaken close to the source data, or could be undertaken in the cloud, e.g. using an inference engine.

The use of low-memory residual learning in hardware pipelines, where standard residual learning may not be supported, comes with all of the advantages that the standard residual learning method introduced.

Furthermore, the method described herein can support all types (from shallow to deep) of skip connections and support different residual learning-based architectures (i.e Unets, O. Ronneberger, et al. "U-Net: Convolutional Networks for Biomedical Image Segmentation", MICCAI, 2015, DenseNets). The method is easy to incorporate it into any CNN architecture. The method is easy to implement it on different deep learning platforms (i.e TensorFlow M. Abadi, et al. "TensorFlow: Large-Scale Machine Learning on Heterogeneous Systems", http://tensorflow.org/, 2015, PyTorch, A. Paszke, et al. "PyTorch: An Imperative Style, High-Performance Deep Learning Library ", NeurIPS, 2019).

If a part of the original filters is used or sacrificed for the identity mapping, this method introduces neither extra parameters nor computational complexity.

In the case of the learnable version, the optimal mapping could deviate from the identity - it is easier to find small fluctuations. Explicit skip connections are supported.

The approach described herein can allow residual learning to be feasible in low-memory systems, allowing them to greatly improve the image quality and reduce the computational complexity by avoiding using computationally expensive CNNs.

As well as being useful for image restoration tasks, such as demosaicking and denoising, in embodiments not falling under the scope of the claims, the method may also be used in applications such as image classification, object detection, semantic segmentation, machine translation, speech recognition, visual recognition, image generation, natural language processing and user prediction where the input signal and the input tensor correspond to parameters used in these applications.

## Claims

1. An apparatus for processing an input signal comprising an input tensor (401, 501, 551, 601, 801), comprising C channels, wherein the input tensor is derived from an image captured by an imaging device, the apparatus having a processor and being configured to implement a convolutional neural network (400, 500, 550, 600, 800) for performing residual learning, the convolutional neural network comprising one or more convolutional layers (402, 502, 504, 505, 552, 553, 554, 602, 802), each layer comprising a plurality of convolutional filters (403, 404, 603, 604, 803, 804), wherein, for at least one of the layers, at least some of the convolutional filters (404, 604, 804) of the respective layer are configured to:
propagate (1901) a representation (406, 501, 556, 601, 806) of the input tensor through the respective layer of the convolutional neural network; and
append (1902) the propagated representation of the input tensor to features (405, 506, 557, 605, 805) derived from other convolutional filters (403, 604, 803) in the respective layer to form a residual connection, wherein the output of the at least one convolutional layer is two sub-tensors each having C channels which are added to perform residual learning for an image restoration task.

2. The apparatus as claimed in claim 1, wherein the representation of the input tensor comprises the input tensor (401, 501, 601).

3. The apparatus as claimed in claim 1 or claim 2, wherein the convolutional neural network comprises one or more skip connections and the at least some of the convolutional filters (404, 604, 804) of the respective layer are configured to propagate the representation of the input tensor to be used for the skip connection through the convolutional neural network.

4. The apparatus as claimed in any preceding claim, wherein, for each such layer, the at least some of the convolutional filters (404, 604, 804) are configured to propagate the representation of the input tensor through the convolutional neural network to the convolutional layer in which it is to be used for residual learning.

5. The apparatus as claimed in any preceding claim, wherein the input tensor comprises C channels and wherein the at least some of the convolutional filters (404, 604) comprise C filters.

6. The apparatus as claimed in claim 5, wherein the output of the respective convolutional layer has N channels and wherein N-C filters are used for the convolution.

7. The apparatus as claimed in any preceding claim, wherein the at least some of the convolutional filters (404, 604) are fixed to be non-learnable and are configured to pass the input tensor to a subsequent convolutional layer.

8. The apparatus as claimed in any preceding claim, wherein the at least some of the convolutional filters (404, 604) are configured to explicitly propagate the input tensor through the at least one of the layers.

9. The apparatus as claimed in claim 7 and claim 8, wherein one or more of the least some convolutional filters (604) are Dirac filters.

10. The apparatus as claimed in any of claims 1 to 4, wherein the at least some convolutional filters (404, 804) implicitly reconstruct the input tensor to form the representation of the input tensor.

11. The apparatus as claimed in claim 10, wherein the at least some of the convolutional filters (404, 804) are configured to learn the representation of the input tensor as a loss-driven task.

12. The apparatus as claimed in claim 10 or claim 11, wherein a residual loss between the initial input tensor and the output of the respective convolutional layer is defined by the user.

13. The apparatus as claimed in claim 12, wherein the convolutional neural network (800) is configured to determine the number of filters constituting the at least some convolutional filters based on the residual loss.

14. A method (1900) implemented by an apparatus (2000, 2101) having a processor for processing an input signal comprising an input tensor (401, 501, 551, 601, 801), comprising C channels, the apparatus being configured to implement a convolutional neural network (400, 500, 550, 600, 800) for performing residual learning, wherein the input tensor is derived from an image captured by an imaging device, the convolutional neural network comprising one or more convolutional layers (402, 5024, 50, 505, 552, 553, 554, 602, 802), each layer comprising a plurality of convolutional filters (403, 404, 603, 604, 803, 804), wherein the method comprises, for at least one of the layers:
propagating (1901), by at least some of the convolutional filters of the respective layer, a representation (406, 501, 556, 601, 806) of the input tensor through the respective layer of the convolutional neural network; and
appending (1902) the propagated representation of the input tensor to features (405, 506, 557, 605, 805) derived from other convolutional filters (403, 604, 803) in the respective layer to form a residual connection, wherein the output of the at least one convolutional layer is two sub-tensors each having C channels which are added to perform residual learning for an image restoration task.

15. A computer program which, when executed by an apparatus having a processor, causes the apparatus to perform the method of claim 14.

## Patentansprüche

1. Vorrichtung zum Verarbeiten eines Eingangssignals, umfassend einen Eingangstensor (401, 501, 551, 601, 801), umfassend C Kanäle, wobei der Eingangstensor aus einem durch eine Bildgebungseinrichtung aufgenommenen Bild abgeleitet wird, wobei die Vorrichtung einen Prozessor aufweist und dazu konfiguriert ist, ein faltendes neuronales Netzwerk (400, 500, 550, 600, 800) zum Durchführen von Restlernen zu implementieren, wobei das faltende neuronale Netzwerk eine oder mehrere Faltungsschichten (402, 502, 504, 505, 552, 553, 554, 602, 802) umfasst, wobei jede Schicht eine Vielzahl von Faltungsfiltern (403, 404, 603, 604, 803, 804) umfasst, wobei mindestens einige der Faltungsfilter (404, 604, 804) der jeweiligen Schicht für mindestens eine der Schichten dazu konfiguriert ist:
eine Darstellung (406, 501, 556, 601, 806) des Eingangstensors über die jeweilige Schicht des faltenden neuronalen Netzwerks zu propagieren (1901); und
die propagierte Darstellung des Eingangstensors an Merkmale (405, 506, 557, 605, 805) anzuhängen (1902), die aus anderen Faltungsfiltern (403, 604, 803) in der jeweiligen Schicht abgeleitet werden, um eine Restverbindung auszubilden, wobei die Ausgabe der mindestens einen Faltungsschicht zwei Untertensoren sind, die jeweils C Kanäle aufweisen, welche hinzugefügt werden, um ein Restlernen für eine Bildwiederherstellungsaufgabe durchzuführen.

2. Vorrichtung nach Anspruch 1, wobei die Darstellung des Eingangstensors den Eingangstensor (401, 501, 601) umfasst.

3. Vorrichtung nach Anspruch 1 oder Anspruch 2, wobei das faltende neuronale Netzwerk eine oder mehrere Skip-Verbindungen umfasst und mindestens einige der Faltungsfilter (404, 604, 804) der jeweiligen Schicht dazu konfiguriert sind, die Darstellung des Eingangstensors, der für die Skip-Verbindung zu verwenden ist, über das faltende neuronale Netzwerk zu propagieren.

4. Vorrichtung nach einem der vorhergehenden Ansprüche, wobei mindestens einige der Faltungsfilter (404, 604, 804) für jede derartige Schicht dazu konfiguriert sind, die Darstellung des Eingangstensors über das faltende neuronale Netzwerk an die Faltungsschicht zu propagieren, in welcher sie zum Restlernen zu verwenden ist.

5. Vorrichtung nach einem der vorhergehenden Ansprüche, wobei der Eingangstensor C Kanäle umfasst, und wobei mindestens einige der Faltungsfilter (404, 604) C Filter umfassen.

6. Vorrichtung nach Anspruch 5, wobei die Ausgabe der jeweiligen Faltungsschicht N Kanäle aufweist, und wobei N-C Filter für die Faltung verwendet werden.

7. Vorrichtung nach einem der vorhergehenden Ansprüche, wobei mindestens einige der Faltungsfilter (404, 604) fixiert sind, um nicht lernbar zu sein, und dazu konfiguriert sind, den Eingangstensor an eine nachfolgende Faltungsschicht weiterzugeben.

8. Vorrichtung nach einem der vorhergehenden Ansprüche, wobei mindestens einige der Faltungsfilter (404, 604) dazu konfiguriert sind, den Eingangstensor über mindestens eine der Schichten explizit zu propagieren.

9. Vorrichtung nach Anspruch 7 und Anspruch 8, wobei einer oder mehrere der mindestens einigen Faltungsfilter (604) Dirac-Filter sind.

10. Vorrichtung nach einem der Ansprüche 1 bis 4, wobei die mindestens einigen Faltungsfilter (404, 804) den Eingangstensor implizit rekonstruieren, um die Darstellung des Eingangstensors auszubilden.

11. Vorrichtung nach Anspruch 10, wobei die mindestens einigen der Faltungsfilter (404, 804) dazu konfiguriert sind, die Darstellung des Eingangstensors als eine verlustgesteuerte Aufgabe zu erlernen.

12. Vorrichtung nach Anspruch 10 oder Anspruch 11, wobei ein Restverlust zwischen dem anfänglichen Eingangstensor und der Ausgabe der jeweiligen Faltungsschicht durch den Benutzer definiert wird.

13. Vorrichtung nach Anspruch 12, wobei das faltende neuronale Netzwerk (800) dazu konfiguriert ist, die Anzahl von Filtern, welche die mindestens einigen Faltungsfilter darstellen, basierend auf dem Restverlust zu bestimmen.

14. Verfahren (1900), das durch eine Vorrichtung (2000, 2101) implementiert wird, die einen Prozessor zum Verarbeiten eines Eingangssignals aufweist, umfassend einen Eingangstensor (401, 501, 551, 601, 801), umfassend C Kanäle, wobei die Vorrichtung dazu konfiguriert ist, ein faltendes neuronales Netzwerk (400, 500, 550, 600, 800) zum Durchführen von Restlernen zu implementieren, wobei der Eingangstensor aus einem durch eine Bildgebungseinrichtung aufgenommenen Bild abgeleitet wird, das faltende neuronale Netzwerk eine oder mehrere Faltungsschichten (402, 5024, 50, 505, 552, 553, 554, 602, 802) umfasst, wobei jede Schicht eine Vielzahl von Faltungsfiltern (403, 404, 603, 604, 803, 804) umfasst, wobei das Verfahren für mindestens eine der Schichten Folgendes umfasst:
Propagieren (1901) einer Darstellung (406, 501, 556, 601, 806) des Eingangstensors über die jeweilige Schicht des faltenden neuronalen Netzwerks durch mindestens einige der Faltungsfilter der jeweiligen Schicht; und
Anhängen (1902) der propagierten Darstellung des Eingangstensors an Merkmale (405, 506, 557, 605, 805), die aus anderen Faltungsfiltern (403, 604, 803) in der jeweiligen Schicht abgeleitet werden, um eine Restverbindung auszubilden, wobei die Ausgabe der mindestens einen Faltungsschicht zwei Untertensoren sind, die jeweils C Kanäle aufweisen, welche hinzugefügt werden, um ein Restlernen für eine Bildwiederherstellungsaufgabe durchzuführen.

15. Computerprogramm, welches bei Ausführung durch eine Vorrichtung, die einen Prozessor aufweist, bewirkt, dass die Vorrichtung das Verfahren nach Anspruch 14 durchführt.

## Revendications

1. Appareil de traitement d'un signal d'entrée comprenant un tenseur d'entrée (401, 501, 551, 601, 801) comprenant C canaux, dans lequel le tenseur d'entrée est dérivé d'une image capturée par un dispositif d'imagerie, l'appareil étant équipé d'un processeur et configuré pour mettre en œuvre un réseau neuronal convolutif (400, 500, 550, 600, 800) pour réaliser un apprentissage résiduel, le réseau neuronal convolutif comprenant une ou plusieurs couches convolutives (402, 502, 504, 505, 552, 553, 554, 602, 802), chaque couche comprenant une pluralité de filtres convolutifs (403, 404, 603, 604, 803, 804), dans lequel, pour au moins une des couches, au moins certains des filtres convolutifs (404, 604, 804) de la couche respective sont configurés pour :
propager (1901) une représentation (406, 501, 556, 601, 806) du tenseur d'entrée à travers la couche respective du réseau neuronal convolutif ; et
ajouter (1902) la représentation propagée du tenseur d'entrée à des caractéristiques (405, 506, 557, 605, 805) dérivées d'autres filtres convolutifs (403, 604, 803) dans la couche respective pour former une connexion résiduelle, dans lequel la sortie de l'au moins une couche convolutive est constituée de deux sous-tenseurs ayant chacun C canaux qui sont ajoutés pour réaliser un apprentissage résiduel pour une tâche de restauration d'image.

2. Appareil selon la revendication 1, dans lequel la représentation du tenseur d'entrée comprend le tenseur d'entrée (401, 501, 601).

3. Appareil selon la revendication 1 ou la revendication 2, dans lequel le réseau neuronal convolutif comprend une ou plusieurs connexions de saut et les au moins certains des filtres convolutifs (404, 604, 804) de la couche respective sont configurés pour propager la représentation du tenseur d'entrée à utiliser pour la connexion de saut à travers le réseau neuronal convolutif.

4. Appareil selon une quelconque revendication précédente, dans lequel, pour chaque telle couche, les au moins certains des filtres convolutifs (404, 604, 804) sont configurés pour propager la représentation du tenseur d'entrée à travers le réseau neuronal convolutif jusqu'à la couche convolutive dans laquelle il doit être utilisé pour l'apprentissage résiduel.

5. Appareil selon une quelconque revendication précédente, dans lequel le tenseur d'entrée comprend C canaux et dans lequel les au moins certains des filtres convolutifs (404, 604) comprennent C filtres.

6. Appareil selon la revendication 5, dans lequel la sortie de la couche convolutive respective comporte N canaux et dans lequel N-C filtres sont utilisés pour la convolution.

7. Appareil selon une quelconque revendication précédente, dans lequel les au moins certains des filtres convolutifs (404, 604) sont fixés pour être non apprenables et sont configurés pour transmettre le tenseur d'entrée à une couche convolutive ultérieure.

8. Appareil selon une quelconque revendication précédente, dans lequel les au moins certains des filtres convolutifs (404, 604) sont configurés pour propager explicitement le tenseur d'entrée à travers au moins l'une des couches.

9. Appareil selon la revendication 7 et la revendication 8, dans lequel un ou plusieurs des au moins certains filtres convolutifs (604) sont des filtres de Dirac.

10. Appareil selon l'une quelconque des revendications 1 à 4, dans lequel les au moins certains filtres convolutifs (404, 804) reconstruisent implicitement le tenseur d'entrée pour former la représentation du tenseur d'entrée.

11. Appareil selon la revendication 10, dans lequel les au moins certains des filtres convolutifs (404, 804) sont configurés pour apprendre la représentation du tenseur d'entrée en tant que tâche pilotée par perte.

12. Appareil selon la revendication 10 ou la revendication 11, dans lequel une perte résiduelle entre le tenseur d'entrée initial et la sortie de la couche convolutive respective est définie par l'utilisateur.

13. Appareil selon la revendication 12, dans lequel le réseau neuronal convolutif (800) est configuré pour déterminer le nombre de filtres constituant les au moins certains filtres convolutifs sur la base de la perte résiduelle.

14. Procédé (1900) mis en œuvre par un appareil (2000, 2101) comprenant un processeur pour traiter un signal d'entrée comprenant un tenseur d'entrée (401, 501, 551, 601, 801) comprenant C canaux, l'appareil étant configuré pour mettre en œuvre un réseau neuronal convolutif (400, 500, 550, 600, 800) pour réaliser un apprentissage résiduel, dans lequel le tenseur d'entrée est dérivé d'une image capturée par un dispositif d'imagerie, le réseau neuronal convolutif comprenant une ou plusieurs couches convolutives (402, 5024, 50, 505, 552, 553, 554, 602, 802), chaque couche comprenant une pluralité de filtres convolutifs (403, 404, 603, 604, 803, 804), dans lequel le procédé comprend, pour au moins une des couches :
la propagation (1901), par au moins certains des filtres convolutifs de la couche respective, d'une représentation (406, 501, 556, 601, 806) du tenseur d'entrée à travers la couche respective du réseau neuronal convolutif ; et
l'ajout (1902) de la représentation propagée du tenseur d'entrée à des caractéristiques (405, 506, 557, 605, 805) dérivées d'autres filtres convolutifs (403, 604, 803) dans la couche respective pour former une connexion résiduelle, dans lequel la sortie de l'au moins une couche convolutive est constituée de deux sous-tenseurs ayant chacun C canaux qui sont ajoutés pour réaliser un apprentissage résiduel pour une tâche de restauration d'image.

15. Programme informatique qui, lorsqu'il est exécuté par un appareil doté d'un processeur, amène l'appareil à réaliser le procédé selon la revendication 14.
